# EUROPEAN PATENT APPLICATION

(11) **EP 4 550 492 A1**
(43) Date of publication of application: **07.05.2025**
(21) Application number: 23907671.4
(22) Date of filing: 19.12.2023
(51) Int. Cl.: H01M 10/04, H01M 10/44, H01M 10/0585, H01M 10/052, H01M 10/6571

(54) **SECONDARY BATTERY MANUFACTURING DEVICE**

(30) Priority: 23.12.2022 KR 20220183595; 18.12.2023 KR 20230184107
(71) Applicant: LG Energy Solution, Ltd., Seoul 07335 (KR)
(72) Inventor: KIM, Taejong, Daejeon 34122 (KR)
(74) Representative: Hoffmann Eitle
(86) International application number: PCT/KR2023/020927
(87) International publication number: WO 2024/136386

(57) **Abstract**

A secondary battery manufacturing apparatus according to one embodiment of the present disclosure includes at least one pressing unit that applies pressure on a plurality of battery cells in a state where the plurality of battery cells are built in, wherein the pressing unit comprises a plurality of pressing blocks located respectively at the outermost side of the plurality of battery cells and between the plurality of battery cells, and a pressure supply section that applies pressure to the plurality of pressing blocks, wherein the pressing block includes a pressing plate and a pressure sensor unit located on one surface of the pressing plate, and wherein the pressure sensor unit corresponds to the body surface of the battery cell.

## Description

### [TECHNICAL FIELD]

### Cross Citation with Related Application(s)

This application claims priority benefit of Korean Patent Application No. 10-2022-0183595 filed on December 23, 2022 and Korean Patent Application No. 10-2023-0184107 filed on December 18, 2023 in the Korean Intellectual Property Office, the disclosures of which are incorporated herein by reference in their entirety.

The present disclosure relates to a secondary battery manufacturing apparatus, and more particularly, to a secondary battery manufacturing apparatus that can apply a desired pressure regardless of a change in cell thickness in the battery cell activation process, and can apply the same pressure as a whole to the pressed surface of the cell.

### [BACKGROUND]

With the technology development and increased demand for mobile devices, the demand for secondary batteries as energy sources has been rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Research into lithium secondary batteries having high energy density and discharge voltage is actively underway, and some commercialization stages are in progress.

Such a lithium secondary battery is manufactured by embedding an electrode assembly together with an electrolyte in a battery case, wherein the electrode assembly is obtained by coating a positive or negative electrode active material, a binder and a conductive material on a current collector in the form of a slurry and drying them to form an electrode mixture layer, thereby manufacturing a positive electrode and a negative electrode, interposing a separator between the positive electrode and the negative electrode, and then laminating them.

A lithium metal battery is a battery that uses a lithium metal (Li-metal) thin film as a negative electrode active material, and has the advantage of theoretically having higher energy density and capacity than a conventionally used secondary battery employing graphite-based negative electrode, etc. Therefore, research and development are continuing in order to apply lithium metal batteries to secondary batteries that require high energy density.

However, due to the characteristics of lithium metal which acts as a negative electrode active material, lithium metal batteries induce a large change in the volume of the negative electrode in a charge/discharge process, and thus involve a large change in thickness compared to lithium ion batteries. Further, in a lithium metal battery, the pattern in which lithium is formed on the negative electrode may changes depending on the pressure applied to the battery cell during operation, so that the performance of the battery cell may change depending on the pressing force. In particular, lithium metal batteries have problems that due to large thickness changes during charge/discharge in the activation process, a sudden drop in long-term cycle performance occurs if pressure is not applied to the battery cell. To compensate for this, a constant-distance pressing mode can be applied by placing plates on the upper and lower parts of the battery cell, however, this has the disadvantage that the pressing force increases gradually during charge, and the pressure is completely released during discharge.

Accordingly, there is a need to develop a secondary battery manufacturing apparatus that can apply a desired pressure regardless of a change in cell thickness in the battery cell activation process, and can apply the same pressure as a whole to the pressed surface of the cell.

### [DETAILED DESCRIPTION OF THE INVENTION]

### [Technical Problem]

It is an object of the present disclosure to provide a secondary battery manufacturing apparatus that can apply a desired pressure regardless of a change in cell thickness in the battery cell activation process, and can apply the same pressure as a whole to the pressed surface of the cell.

The objects of the present disclosure are not limited to the aforementioned objects, and other objects which are not mentioned herein should be clearly understood by those skilled in the art from the following detailed description and the accompanying drawing.

### [Technical Solution]

According to one embodiment of the present disclosure, there is provided a secondary battery manufacturing apparatus comprising: at least one pressing unit that applies pressure on a plurality of battery cells in a state where the plurality of battery cells are built in, wherein the pressing unit comprises a plurality of pressing blocks located respectively at the outermost side of the plurality of battery cells and between the plurality of battery cells, and a pressure supply section that applies pressure to the plurality of pressing blocks, wherein the pressing block includes a pressing plate and a pressure sensor unit located on one surface of the pressing plate, and wherein the pressure sensor unit corresponds to the body surface of the battery cell.

The pressing block may further comprise a protective pad unit attached to a surface of the pressing plate that faces the body surface of the battery cell.

The secondary battery manufacturing apparatus further comprises a pair of side surface plates located respectively on the outermost side of the plurality of battery cells, wherein the plurality of pressing blocks may be located between the pair of side surface plates.

The secondary battery manufacturing apparatus may further comprise a first guide member that connects the pair of side surface plates to each other at an upper part and a lower part of the plurality of pressing blocks.

The pressure supply section comprises a pressure supply plate and at least two pressure supply units located on one surface of the pressure supply plate, and the pressure supply plate may face a pressing block located at the outermost side among the plurality of pressing blocks.
in the pressure supply section, the pressure supply unit comprises at least one selected from a servo motor, a pneumatic cylinder, and a hydraulic press.

The at least two pressure supply units comprise a first pressure supply unit and a second pressure supply unit, and on one surface of the pressure supply plate, the first pressure supply unit and the second pressure supply unit may be arranged to be spaced apart from each other in the vertical direction.

The at least two pressure supply units comprises a pair of first pressure supply units and a pair of second pressure supply units, the pair of first pressure supply units are arranged to be spaced apart from each other at the upper part of one surface of the pressure supply plate, and the pair of second pressure supply units are arranged to be spaced apart from each other at the lower part of one surface of the pressure supply plate.

The pressure supply section further comprises a load cell connected to a pressing block located at the outermost side among the plurality of pressing blocks, and the other surface of the pressure supply plate may be connected to the load cell to apply pressure to the plurality of pressing blocks.

The secondary battery manufacturing apparatus may further comprise a second guide member that connects the pressure supply plate and the plurality of pressing blocks to each other at an upper part and a lower part of the load cell.

The secondary battery manufacturing apparatus further comprises at least one pair of pressure relief sections located between a pair of pressing blocks adjacent to each other among the plurality of pressing blocks, wherein the at least one pair of pressure relief sections may be located at an upper part and a lower part of the pair of pressing blocks, respectively.

The at least one pair of pressure relief sections comprise a pair of first pressure relief sections and a pair of second pressure relief sections, the pair of first pressure relief sections are located adjacent to one side surface of the pair of pressing blocks, and the pair of second pressure relief sections may be located adjacent to the other side surface of the pair of pressing blocks.

The pressure relief section comprises a rotating roll and a rotating shaft passing through the center of the rotating roll, and the rolling surface of the rotating roll may rotate along the space between the pair of pressing blocks.

A cross section of the rotating roll cut based on the pressing direction of the pressing block may have an oval shape.

The secondary battery manufacturing apparatus may comprise a chamber section in which the at least one pressing unit is arranged to be spaced apart from each other, and a temperature adjustment unit that adjusts the temperature inside the chamber section.

In the chamber section, the at least one pressing unit may be arranged such that the pressing direction and the gravity direction of the pressing unit are perpendicular to each other.

In the chamber section, the at least one pressing unit may be arranged such that the pressing direction and the gravity direction of the pressing unit are equal to each other.

The secondary battery manufacturing apparatus may further comprise a pressure information acquisition unit that acquires pressure information measured from the pressure sensor unit, and a pressure adjustment unit that adjusts pressure applied to the battery cell based on the pressure information acquired from the pressure information acquisition unit.

The pressure sensor unit may acquire pressure information on the entire body surface of the battery cell.

The pressure sensor unit may measure the surface pressure of the battery cell in a grid form.

### [Advantageous Effects]

According to embodiments, the secondary battery manufacturing apparatus of the present disclosure includes a pressing unit capable of uniformly applying pressure up to the inside of the lithium metal battery and thus, can apply a desired pressure regardless of a change in cell thickness in the battery cell activation process, and can apply the same pressure as a whole to the pressed surface of the cell.

Effects obtainable from the present disclosure are not limited to the effects mentioned above, and additional other effects not mentioned herein will be clearly understood from the description and the appended drawings by those skilled in the art.

### [BRIEF DESCRIPTION OF THE DRAWINGS]

FIG. 1 is a block diagram schematically showing a secondary battery manufacturing apparatus according to an embodiment of the present disclosure;
FIG. 2 is a diagram showing the secondary battery manufacturing apparatus of FIG. 1;
FIG. 3 is a diagram showing a pressing unit included in the secondary battery manufacturing apparatus of FIG. 2;
FIG. 4 is a diagram which enlarges and shows a part of the pressing unit of FIG. 3;
FIG. 5 is a diagram showing pressure information acquired from the pressure sensor unit included in the pressing block of FIG. 4;
FIG. 6 is a diagram showing a pressure supply section included in the pressing unit of FIG. 3;
FIG. 7 is a diagram which enlarges and shows a part of the pressing unit included in the secondary battery manufacturing apparatus according to another embodiment of the present disclosure, which is a diagram showing a pressure relief section located between a pair of pressing plates;
FIG. 8 is a cross-sectional view of the pressure relief portion included in the pressing unit of FIG. 7.
FIG. 9 is a perspective view of a part of the pressing unit of FIG. 7.
FIGS. 10 and 11 are diagrams showing the positions of the pressure supply unit and the pressure relief section with reference to the pressing surface of the pressing unit of FIGS. 8 and 9;
FIG. 12 is a diagram showing a secondary battery manufacturing apparatus according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of portions that are not related to the description will be omitted for clarity, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

Now, a secondary battery manufacturing apparatus according to one embodiment of the present disclosure will be described.

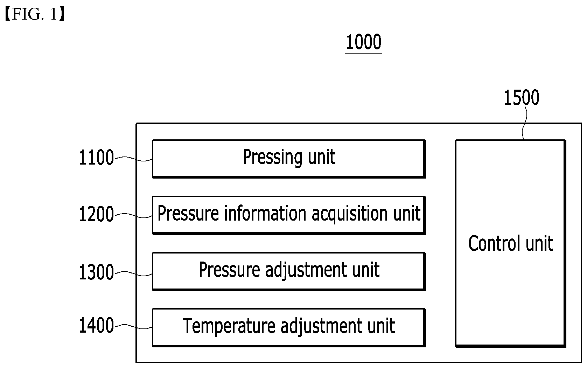

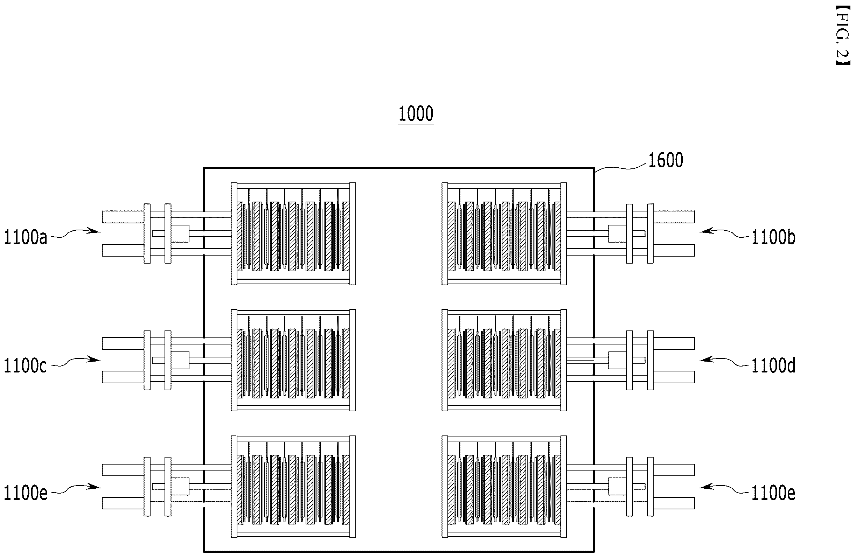

FIG. 1 is a block diagram schematically showing a secondary battery manufacturing apparatus according to an embodiment of the present disclosure. FIG. 2 is a diagram showing the secondary battery manufacturing apparatus of FIG. 1.

Referring to FIGS. 1 to 3, the secondary battery manufacturing apparatus 1000 according to an embodiment of the present disclosure comprises at least one pressing unit 1100 that presses a plurality of battery cells 100 in a state where the plurality of battery cells 100 are built in.

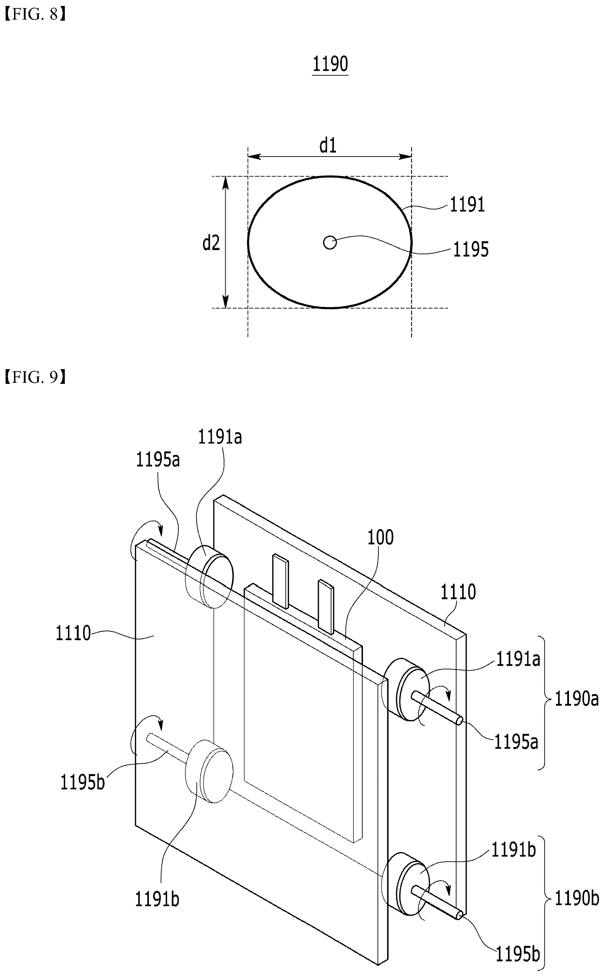

Here, the battery cell 100 is a pouch battery cell and includes an electrode assembly inside the battery case. Further, the battery cell 100 has a structure in which an electrode lead connected to the electrode tabs of the electrode assembly is exposed to the outside, and a lead film is attached to the upper and lower parts of the electrode lead. As one example, the battery cell 100 may be configured such that the positive electrode lead and the negative electrode lead may protrude on the same side surface of the battery case as shown in FIG. 9. However, the structure of the battery cell 100 is not limited thereto, and the positive electrode lead and the negative electrode lead may protrude on different side surfaces of the battery case.

The electrode assembly includes a positive electrode, a negative electrode and a separator. More specifically, the electrode assembly may be configured such that a positive electrode and a negative electrode are sequentially stacked with a separator being interposed therebetween and are electrically insulated from each other. Here, the electrode assembly may be a stacked electrode assembly or a stacked/folded electrode assembly. However, the form of the electrode assembly is not limited thereto, and can be included in the present embodiment as long as it is a form of an electrode assembly including a positive electrode, a negative electrode and a separator. In addition, the positive electrode, the negative electrode and the separator may be generally made of materials included in battery cells.

Further, lithium metal (metal) can be used as the negative electrode included in the battery cell 100. In particular, lithium metal has a characteristic of being soft and foldable as compared to graphite used in conventional negative electrodes. In addition, lithium metal (metal) has the advantage that it can be easily joined to other components with relatively less strong compression as compared to materials used in conventional negative electrodes. Further, lithium metal (metal) is accompanied by a large thickness change during charge/discharge in the activation process of the battery cell 100, and thus, it is necessary to apply appropriate pressure to the battery cell 100 to prevent a performance change or a sudden drop.

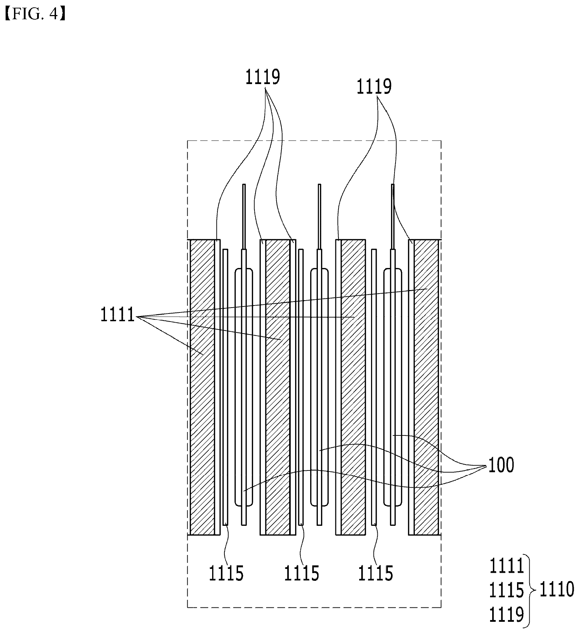

In addition, the secondary battery manufacturing apparatus 1000 according to the present embodiment may further comprise a pressure information acquisition unit 1200 that acquires pressure information acquired from the pressure sensor unit 1119 (FIG. 4) included in the pressing unit 1100, and a pressure adjustment unit 1300 that adjusts pressure applied to the battery cell 100 based on the pressure information acquired from the pressure information acquisition unit 1200.

Here, the pressure adjustment unit 1300 controls the operation of a pressure supply section 1140 and/or a pressure relief section 1190 included in the pressing unit 1100, which will be described later, thereby capable of adjusting pressure applied to the plurality of battery cells 100.

In addition, the secondary battery manufacturing apparatus 1000 according to the present embodiment further comprises a temperature adjustment unit 1400 that adjusts the temperature of a plurality of battery cells 100 arranged in at least one pressing unit 1100. As one example, the secondary battery manufacturing apparatus 1000 according to the present embodiment further comprises a chamber section 1600 in which at least one pressing unit is spaced apart from each other, and the temperature adjustment unit 1400 can adjust the temperature within the chamber section 1600. The chamber section 1600 can be used to adjust the temperature of the plurality of battery cells 100 in the process of performing charge and discharge test of the plurality of battery cells 100 for a long time.

Here, the temperature adjustment unit 1400 may have a configuration such as a heater, and any device for adjusting the temperature within the chamber section 1600 can be included in the present embodiment. However, the position of the temperature adjustment unit 1400 is not limited thereto, and a mode of directly adjusting the temperature of the pressing block 1110 included in the pressing unit 1100 can also be included in the present embodiment.

In addition, the secondary battery manufacturing apparatus 1000 according to the present embodiment may further comprise a pressing unit 1100, a pressure information acquisition unit 1200, a pressure adjustment unit 1300, and a control unit 1500 that controls the temperature adjustment unit 1400. More specifically, the control unit 1500 may comprise at least one of a CPU (Central Processing Unit), a RAM (Random Access Memory), a GPU (Graphics Processing Unit), one or more microprocessors, and other electronic components that can process input data according to predetermined logic. As one example, the control unit 1500 develops on the RAM the pressing process for the battery cell 100 that can be executed by the pressing unit 1100, and can execute various processes such as adjusting the pressure and temperature applied to the battery cell 100 according to the developed program.

In the secondary battery manufacturing apparatus 1000 according to the present embodiment, at least one pressing unit 1100 may be arranged within the chamber section 1600 such that the pressing direction and the gravity direction of each pressing unit 1100 are perpendicular to each other.

As one example, as shown in FIG. 2, at least one pressing unit 1100 may comprise a first pressing unit 1100a, a second pressing unit 1100b, a third pressing unit 1100c, a fourth pressing unit 1100d, a fifth pressing unit 1100e, and a sixth pressing unit 1100f. Herein, the first pressing unit 1100a, the second pressing unit 1100b, the third pressing unit 1100c, the fourth pressing unit 1100d, the fifth pressing unit 1100e, and the sixth pressing unit 1100f may all be arranged such that the pressing direction and the gravity direction are perpendicular to each other. In addition, the first pressing unit 1100a and the second pressing unit 1100b, the third pressing unit 1100c and the fourth pressing unit 1100d, the fifth pressing unit 1100e and the sixth pressing unit 1100f may be arranged symmetrically with respect to a virtual reference line, respectively. Further, the first pressing unit 1100a, the third pressing unit 1110c, and the fifth pressing unit 1100e may be spaced apart from each other in the direction of gravity. Further, the second pressing unit 1100b, the fourth pressing unit 1100d, and the sixth pressing unit 1100f may be spaced apart from each other in the direction of gravity.

Thereby, the secondary battery manufacturing apparatus 1000 according to the present embodiment is configured such that the pressing direction and the gravity of the pressing unit 1100 are perpendicular to each other, whereby respective components included in the secondary battery manufacturing apparatus 1000 and the plurality of battery cells 100 built into the pressurizing unit 1100 can be more freed from the own weight of the plurality of battery cells 100.

However, in the secondary battery manufacturing apparatus 1000 according to the present embodiment, the number, position, arrangement direction, and the like of the pressing unit 1100 are not limited thereto, and the number, position, arrangement direction, and the like of the pressing unit 1100 can be changed and applied as necessary.

Next, the pressing unit 1100 included in the secondary battery manufacturing apparatus 1000 according to an embodiment of the present disclosure will be mainly described.

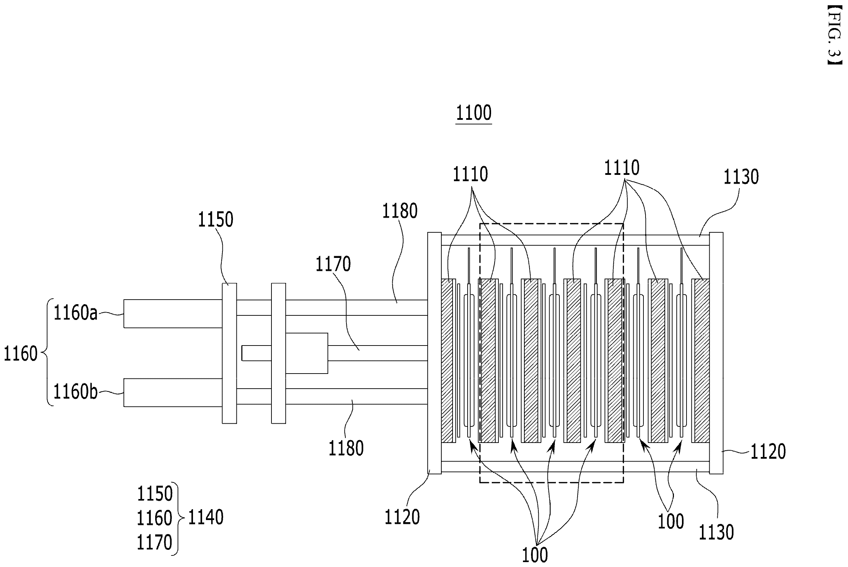

FIG. 3 is a diagram showing a pressing unit included in the secondary battery manufacturing apparatus of FIG. 2. FIG. 4 is a diagram which enlarges and shows a part of the pressing unit of FIG. 3.

Referring to FIGS. 3 and 4, the pressing unit 1100 comprises a plurality of pressing blocks 1110 located respectively at the outermost side of the plurality of battery cells 100 and between the plurality of battery cells 100, and a pressure supply section 1140 that applies pressure to a plurality of pressing blocks 1110.

More specifically, as shown in FIG. 3, a plurality of pressing blocks 1110 may be located respectively between battery cells 100 adjacent to each other among the plurality of battery cells 100, and may be respectively located on the outer surface of the battery cell 100 located at the outermost side among the plurality of battery cells 100.

Thereby, in the secondary battery manufacturing apparatus 1000 according to the present embodiment, a plurality of battery cells 100 may be respectively arranged between a plurality of pressing blocks 1110 within the pressing unit 1100, whereby the plurality of pressing blocks 1110 can constantly apply a desired pressure to the plurality of battery cells 100 and can uniformly apply pressure to the inside of the battery cells 100.

Further, even when the negative electrode included in the battery cell 100 includes lithium metal (metal), the secondary battery manufacturing apparatus of the present embodiment is configured such that a plurality of pressing blocks 1110 apply appropriate pressure to each battery cell 100 during charge/discharge in the activation process of the battery cell 100, and thus, can prevent a performance change or a sudden drop, and also extend the life of the battery cell 100 while stabilizing the interface of the lithium metal (metal).

Further, as shown in FIG. 3, in the secondary battery manufacturing apparatus 1000 according to the present embodiment, the pressing unit 1100 may further comprise a pair of side surface plates 1120 located at the outermost side of the plurality of battery cells 100, respectively. Further, a plurality of pressing blocks 1110 may be located between a pair of side surface plates 1120. That is, between a pair of side plates 1120, a plurality of pressing blocks 1110 may have a plurality of battery cells 100 built in.

Further, as shown in FIG. 3, in the secondary battery manufacturing apparatus 1000 according to the present embodiment, the pressing unit 1100 may further comprise a first guide member 1130 that connects a pair of side surface plates 1120 at an upper part and a lower part of the plurality of pressing blocks 1110 to each other. As one example, the first guide member 1130 may be a guide shaft.

Thereby, in the secondary battery manufacturing apparatus 1000 according to the present embodiment, the plurality of battery cells 100 within the pressing unit 1100 can be stably connected to each other in a state in which the plurality of battery cells are respectively arranged between the plurality of pressing blocks 1110.

However, the fixing mode of the internal components of the pressing unit 1100 is not limited thereto, and in addition to the coupling structure of the pair of side plates 1120 and the first guide member 1130, any mode that can stably fix the state in which the plurality of battery cells 100 are respectively arranged between the plurality of pressing blocks 1110 can be included in the present embodiment.

Referring to FIG. 4, in the secondary battery manufacturing apparatus 1000 according to the present embodiment, the pressing block 1110 may comprise a pressing plate 1111 and a pressure sensor unit 1115 located on one surface of the pressing plate 1111. Here, the pressure sensor unit 1115 may correspond to the body surface of the battery cell 100. In other words, the pressure sensor unit 1115 may contact the body surface of the battery cell 100. Further, the pressure sensor unit 1115 may correspond to the entire body surface of the battery cell 100, and can acquire pressure information on the entire body surface of the battery cell 100. As one example, the pressure sensor unit 1115 may have a size that is the same as or larger than the body surface of the battery cell 100.

However, the present embodiment is not limited to the case where the pressure sensor unit 1115 is formed one by one for each battery cell 100 as shown in FIG. 4. Unlike FIG. 4 , a case where at least two pressure sensor units 1115 are arranged within a plurality of battery cells 100 can also be included in the present embodiment.

Here, the pressure sensor unit 1115 can acquire positional pressure information applied to the body surface of each battery cell 100. In other words, the pressure sensor unit 1115 can acquire information about the pressure deviation for each position with respect to the body surface of the battery cell 100.

Referring to FIG. 4, in the battery cell manufacturing apparatus 1000 according to the present embodiment, the pressing block 1110 may further comprise a protective pad unit 1119 attached to the surface of the pressing plate 1111 that faces the body surface of the battery cell 100.

Here, the protective pad unit 1119 can used to alleviate the impact, etc. capable of receiving when battery cells 100 located between adjacent pressing blocks 1110 are pressured by the pressure blocks 1110, or when swelling of the battery cells 100 themselves occurs.

As one example, the protective pad unit 1119 is made of at least one material selected from the group consisting of urethane, silicone, rubber, PET(polyethylene terephthalate), PP(polypropylene), and PE(polyethylene). However, the material of the protective pad unit 1119 is not limited thereto, and any material that can alleviate the impact applied to the battery cell 100 can be included in the present embodiment.

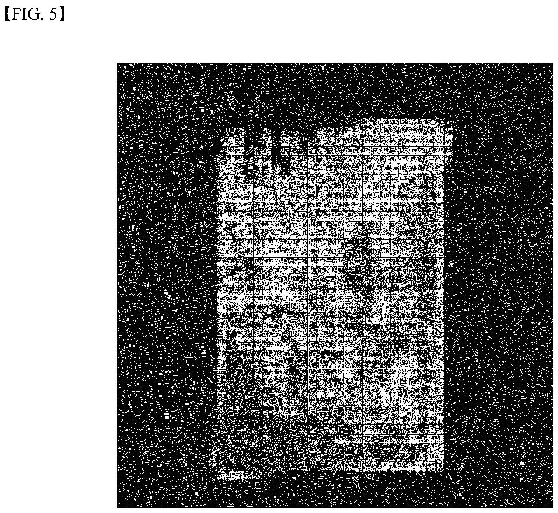

FIG. 5 is a diagram showing pressure information acquired from the pressure sensor unit included in the pressing block of FIG. 4.

Referring to FIGS. 4 and 5, in the secondary battery manufacturing apparatus 1000 according to the present embodiment, the pressure sensor unit 1115 is a surface pressure sensor and can measure surface pressure of the battery cell 100 as an electrical signal in a grid form. That is, as shown in FIG. 5, the pressure sensor unit 1115 can acquire pressure information regarding the pressure deviation depending on the degree of surface pressure of the battery cell 100.

Thereby, in the secondary battery manufacturing apparatus 1000 according to the present embodiment, the pressure sensor unit 1115 can acquire pressure information regarding pressure deviation depending on the surface pressure applied to each of the plurality of battery cells 100, thereby further improving the accuracy of pressure information for the battery cells 100.

In addition, the secondary battery manufacturing apparatus 1000 according to the present embodiment can vary the pressing force of the pressing block 1110 against the battery cell 100 based on the pressure information, and can constantly maintain a target pressure for the battery cell 100 and also reduce the pressure deviation depending on the position of the battery cell 100.

Furthermore, when the negative electrode included in the battery cell 100 includes lithium metal (metal), despite the thickness change that occurs in the battery cell 100 during charge/discharge in the activation process of the battery cell 100, the secondary battery manufacturing apparatus of the present embodiment can apply pressure to the battery cell 100 using the pressure information so that the positional pressure difference is minimized. As a result, the secondary battery manufacturing device of the present embodiment can prevent a performance change or a sudden drop of the battery cell 100, and can also extend the life of the battery cell 100 while stabilizing the interface of the lithium metal.

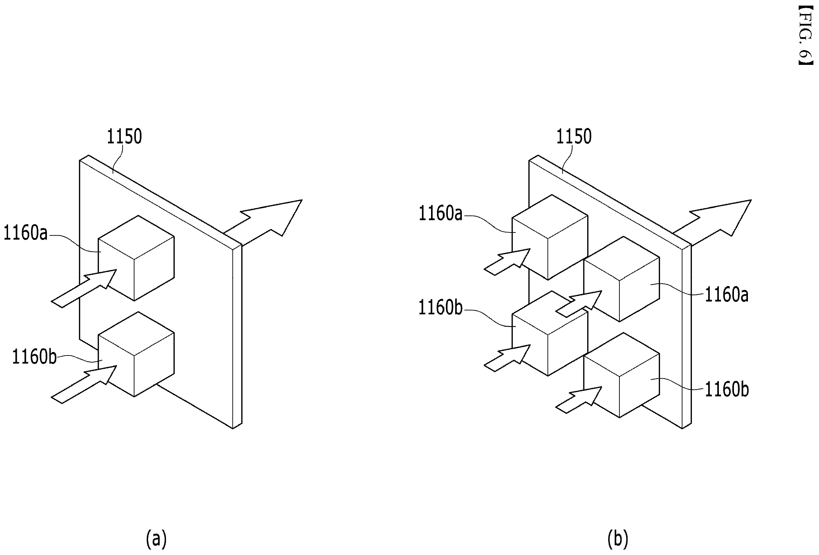

FIG. 6 is a diagram showing a pressure supply section included in the pressing unit of FIG. 3.

Referring to FIG. 3, in the secondary battery manufacturing apparatus 1000 according to the present embodiment, the pressure supply section 1140 corresponds to the body surface of the battery cell 100, and may be uniformly distributed on one surface of the pressurizing block 1110.

Referring to FIGS. 3 and 6, the pressure supply section 1140 may comprise a pressure supply plate 1150 and at least two pressure supply units 1160 located on one surface of the pressure supply plate 1150.

Here, the pressure supply plate 1150 may face the pressing block 1110 located at the outermost side among the plurality of pressing blocks 1110. In other words, one side surface plate 1120 of the pair of side surface plates 1120 located at the outermost side of the plurality of pressing blocks 1110 and the pressure supply plate 1150 may face each other.

As one example, in the pressure supply section 1140, the pressure supply unit 1160 may include at least one selected from a servo motor, a pneumatic cylinder, and a hydraulic press. However, the pressure supply mode of the pressure supply unit 1160 is not limited thereto, and any mode that can apply a constant pressure to the battery cell 100 can be included in the present embodiment.

Referring to FIG. 3, in the secondary battery manufacturing apparatus 1000 according to the present embodiment, the pressure supply section 1140 may further comprise a load cell 1170 connected to the pressing block 1110 located at the outermost side among the plurality of pressing blocks 1110. More specifically, the load cell 1170 may be connected to one side plate 1120 of a pair of side plates 1120 located on the outermost side of the plurality of pressing blocks 1110. In particular, the other surface of the pressure supply plate 1150 is connected to the load cell 1170 to apply pressure to the plurality of pressing blocks 1110.

More specifically, the secondary battery manufacturing apparatus may further comprise a second guide member 1180 that connects the pressure supply plate 1150 and the plurality of pressing blocks 1110 to each other at an upper part and a lower part of the load cell 1170.

Referring to FIG. 6(a), in the pressure supply section 1140, at least two pressure supply units 1160 may comprise a first pressure supply unit 1160a and a second pressure supply unit 1160b. More specifically, on one surface of the pressure supply plate 1150, the first pressure supply unit 1160a and the second pressure supply unit 1160b may be arranged to be spaced apart from each other in the vertical direction.

Referring to FIG. 6(b), in the pressure supply section 1140, at least two pressure supply units 1160 may comprise a pair of first pressure supply units 1160a and a pair of second pressure supply units 1160b. More specifically, the pair of first pressure supply units 1160a are arranged to be spaced apart from each other at the upper part of one surface of the pressure supply plate 1150, and the pair of second pressure supply units 1160b are arranged to be spaced apart from each other at the lower part of one surface of the pressure supply plate 1150.

Thereby, the secondary battery manufacturing apparatus 1000 according to the present embodiment has advantages that the pressure supply section 1140 has pressure supply units 1160 arranged at each position of the battery cell 100, and can provide and maintain a target pressure for each position of the battery cell 100, and further can maintain a constant pressure, that is, a positive pressure, depending on the position of the battery cell 100.

Moreover, when the negative electrode included in the battery cell 100 includes lithium metal (metal), despite the thickness change that occurs in the battery cell 100 during charge/discharge in the activation process of the battery cell 100, the secondary battery manufacturing apparatus of the present embodiment can provide appropriate pressure to each position of the battery cell 100 through the pressure supply unit 1160 disposed at each position of the battery cell 100. Thereby, the secondary battery manufacturing device of the present embodiment can prevent a performance change or a sudden drop of the battery cell 100, and can extend the life of the battery cell 100 while stabilizing the interface of the lithium metal.

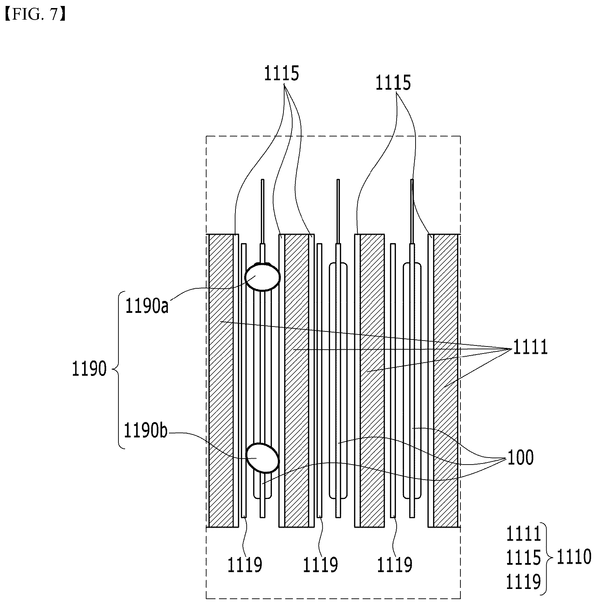

FIG. 7 is a diagram which enlarges and shows a part of the pressing unit included in the secondary battery manufacturing apparatus according to another embodiment of the present disclosure, which is a diagram showing a pressure relief section located between a pair of pressing plates. FIG. 8 is a cross-sectional view of the pressure relief portion included in the pressing unit of FIG. 7. FIG. 9 is a perspective view of a part of the pressing unit of FIG. 7.

In the secondary battery manufacturing apparatus 1000 according to another embodiment of the present disclosure, the pressing unit 1100 may further comprise at least one pair of pressure relief sections 1190 located between a pair of pressing blocks 1110 adjacent to each other among the plurality of pressing blocks 1110. More specifically, the at least one pair of pressure relief sections 1190 may be located at an upper part and a lower part of the pair of pressing blocks 1110, respectively.

Further, as shown in FIG. 9, at least one pair of pressure relief sections 1190 may include a pair of first pressure relief sections 1190a and a pair of second pressure relief sections 1190b. The pair of first pressure relief sections 1190a may be located adjacent to one side surface of the pair of pressing blocks 1110, and the pair of second pressure relief sections 1190b may be located adjacent to the other side surface of the pair of pressing blocks 1110.

As shown in FIG. 8, the pressure relief section 1190 may include a rotating roll 1191 and a rotating shaft 1195. Here, the rotating shaft 1195 passes through the center part of the rotating roll 1191, and the rolling surface of the rotating roll 1191 can rotate along the space between the pair of pressing blocks 1110. Further, a part of the rolling surface of the rotating roll 1191 may contact the inner surface of the pressing block 1110.

Here, the rotation speed of the pressure relief section 1190 may vary depending on the degree of pressure deviation for each position of the battery cell 100. As one example, with respect to the portion where relatively more or less pressure is applied according to the pressure information acquired from the pressure sensor unit 1115, the pressure relief section 1190 may rapidly rotate to quickly decrease or increase the pressure.

As one example, in the pressure relief section 1190, a cross section of the rotating roll 1191 cut based on the pressing direction of the pressing block 1110 may have an oval shape. More specifically, as shown in FIG. 8, the first diameter d1 extending in the horizontal direction based on the center of the cross section of the rotating roll 1191 may be larger than the second diameter d2 extending in the vertical direction.

Thereby, referring to FIGS. 7 to 9, in the secondary battery manufacturing apparatus 1000 according to the present embodiment, the pressure relief section 1190 may adjust the pressure applied to the battery cell 100 based on the difference between the first diameter d1 and the second diameter d2 of the rotating roll 1191.

That is, when the pressure applied to the battery cell 100 located between a pair of pressing blocks 1110 is measured to be higher than the target value, the pressure relief section 1190 can rotate so that the first diameter d 1 of the rotating roll 1191 coincides with the pressing direction, whereby the pressure applied to the battery cell 100 can be adjusted to be relatively low. Unlike the same, when the pressure applied to the battery cell 100 located between a pair of pressing blocks 1110 is measured to be lower than the target value, the pressure relief section 1190 can rotate so that the second diameter d2 of the rotating roll 1191 coincides with the pressing direction, whereby the pressure applied to the battery cell 100 can be adjusted to be relatively high.

Further, when the negative electrode included in the battery cell 100 includes lithium metal (metal), despite the thickness change that occurs in the battery cell 100 during charge/discharge in the activation process of the battery cell 100, the secondary battery manufacturing apparatus of the present embodiment can appropriately adjust pressure for each position of the battery cell 100 through the pressure relief section 1190. This can prevent a performance change and a sudden drop in the battery cell 100, and can extend the life of the battery cell 100 while stabilizing the interface of the lithium metal.

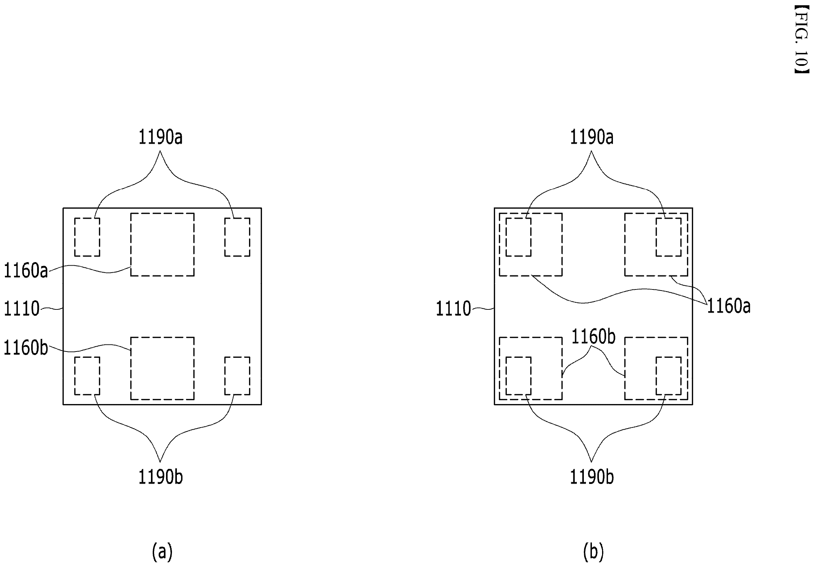

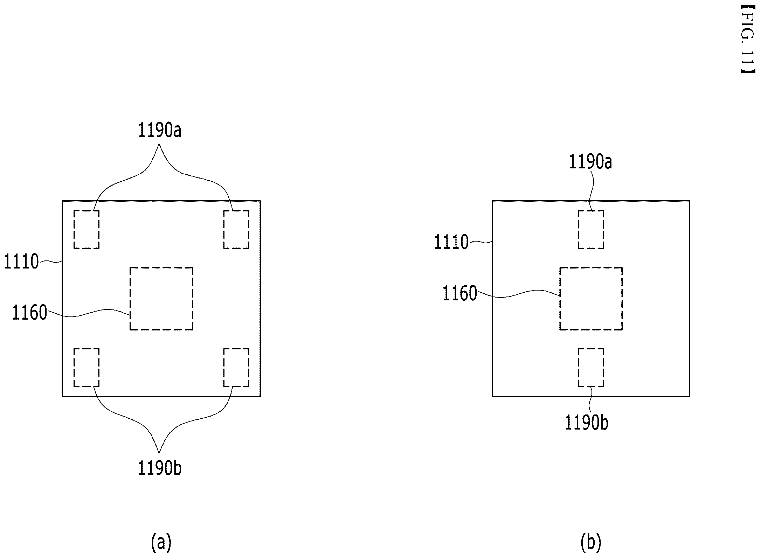

FIGS. 10 and 11 are diagrams showing the positions of the pressure supply unit and the pressure relief section with reference to the pressing surface of the pressing unit of FIGS. 8 and 9.

Referring to FIG. 10(a), in the secondary battery manufacturing apparatus 1000 according to the present embodiment, based on the pressing surface of the pressing unit 1100, the first pressure supply unit 1160a is located at an upper part of the pressing unit 1100, and the second pressure supply unit 1160b may be located at a lower part of the pressing unit 1100. Here, the pair of first pressure relief sections 1190a are located at an upper part of the pressuring unit 1100, and a first pressure supply unit 1160a may be located between a pair of first pressure relief sections 1190a. Further, a pair of second pressure relief sections 1190b may be located at a lower part of the pressuring unit 1100, and a second pressure supply unit 1160b may be located between the pair of second pressure relief sections 1190b.

Thereby, as shown in FIG. 10(a), in the secondary battery manufacturing device 1000 according to the present embodiment, the pressure supply units 1160 are located at the upper and lower parts of the pressing surface of the pressing unit 1100, whereby pressure can be provided in a balanced manner to the upper and lower parts of the pressing surface of the pressing unit 1100, and the pressure deviation applied to the plurality of battery cells 100 may be relatively reduced. In addition, the pressure relief sections 1190 are located at each corner based on the pressing surface of the pressing unit 1100, so that the pressure may be appropriately adjusted according to the pressure deviation applied to the battery cells 100.

Referring to FIG. 10(b), in the secondary battery manufacturing apparatus 1000 according to the present embodiment, based on the pressing surface of the pressing unit 1100, a pair of first pressure supply units 1160a may be located at the upper part of the pressing unit 1100, and a pair of second pressure supply units 1160b may be located at the lower part of the pressing unit 1100. Here, the pair of first pressure relief sections 1190a may be located at the upper part of the pressing part 1100, and the pair of first pressure relief units 1190a may be located at positions corresponding to the pair of first pressure supply units 1160a, respectively. Further, a pair of second pressure relief sections 1190b may be located at the lower part of the pressing part 1100, and the pair of second pressure relief sections 1190b may be located at positions corresponding to the pair of second pressure supply units 1160b, respectively.

Thereby, as shown in FIG. 10(b), in the secondary battery manufacturing device 1000 according to the present embodiment, a pressure supply unit 1160 may be located at each corner based on the pressing surface of the pressing unit 1100, so that pressure can be provided in a more balanced manner over the entire pressing surface of the pressing unit 1100, and the pressure deviation applied to the plurality of battery cells 100 can be effectively reduced. In addition, the pressure relief section 1190 is located at a position corresponding to the pressure supply unit 1160 at each corner based on the pressing surface of the pressing unit 1100, so that the pressure can be adjusted more effectively according to the pressure deviation applied to the battery cells 100.

Referring to FIG. 11, in the secondary battery manufacturing apparatus 1000 according to the present embodiment, based on the pressing surface of the pressing unit 1100, the pressure supply unit 1160 may include one pressure supply unit, unlike the previously described embodiment, and the pressure supply unit 1160 may be located at the center part of the pressing unit 1100.

Here, as shown in FIG. 11(a), a pair of first pressure relief sections 1190a are located at the upper part of the pressing unit 1100, and a pair of second pressure relief sections 1190b may be located at the lower part of the pressing unit 1100. Further, as shown in FIG. 11(b), the first pressure relief section 1190a is located at the upper part of the pressing unit 1100, and the second pressure relief section 1190b may be located at the lower part of the pressing unit 1100, and a pressure supply unit 1160 may be located between the first pressure relief section 1190a and the second pressure relief section 1190b.

In this case, unlike the embodiment of FIG. 10, the pressure provided by the pressure supply unit 1160 is relatively non-uniform, but the pressure relief sections 1190 are located at each corner or at the upper and lower parts based on the pressing surface of the pressing unit 1100, whereby the pressure can be appropriately adjusted according to the pressure deviation applied to the battery cells 100.

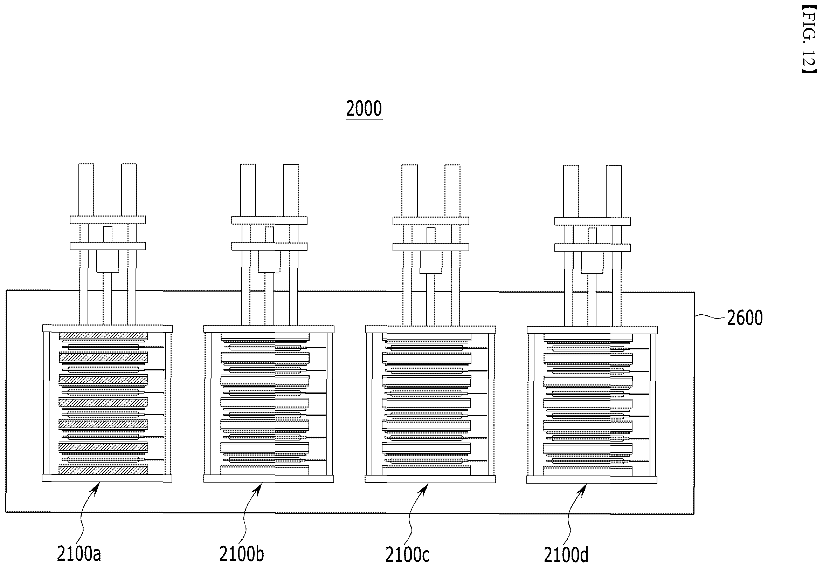

FIG. 12 is a diagram showing a secondary battery manufacturing apparatus according to another embodiment of the present disclosure.

Referring to FIG. 12, the secondary battery manufacturing apparatus 2000 according to the present embodiment can be described mostly in the same way as the secondary battery manufacturing apparatus 1000 described with reference to FIGS. 1 to 11, and only the different parts will be described later.

Referring to FIG. 12, the secondary battery manufacturing apparatus 2000 according to the present embodiment is configured such that in the chamber section 2600, at least one pressing unit 2100 may be arranged so that the pressing direction and the gravity direction of the at least one pressing unit 2100 are equal to each other.

As one example, as shown in FIG. 12, at least one pressing unit 2100 may include a first pressing unit 2100a, a second pressing unit 2100b, a third pressing unit 2100c, and a fourth pressing unit 2100d. Herein, the first pressing unit 2100a, the second pressing unit 2100b, the third pressing unit 2100c, and the fourth pressing unit 2100d may be arranged so that the pressing direction and the gravity direction are equal to each other. Additionally, the first pressing unit 2100a, the second pressing unit 2100b, the third pressing unit 2100c, and the fourth pressing unit 2100d may be spaced apart from each other in the horizontal direction.

Thereby, in the secondary battery manufacturing apparatus 2000 according to the present embodiment, the pressing direction and the gravity direction of the pressing unit 2100 are perpendicular to each other, so that the pressing unit 2100 can press the plurality of battery cells 100 with relatively low pressure due to gravity caused by the own weight of the plurality of battery cells 100.

However, in the secondary battery manufacturing device 2000 according to the present embodiment, the number, position, arrangement direction, and the like of the pressing unit 2100 are not limited thereto, and the number, position, arrangement direction, and the like of the pressing unit 2100 may be changed and applied as necessary.

Although the invention has been described in detail above with reference to preferred embodiments thereof, it will be appreciated by those skilled in the art that the scope of the present disclosure is not limited thereto, and various modifications and improvements can be made in these embodiments without departing from the principles and sprit of the invention, the scope of which is defined in the appended claims and their equivalents.

### [Description of Reference Numerals]

100: battery cell
1000, 2000: secondary battery manufacturing apparatus
1100, 2100: pressing part
1110: pressing block
1111: pressing plate
1115: pressure sensor unit
1119: protective pad unit
1120: side surface plate
1130: first guide member
1140: pressure supply section
1150: pressure supply plate
1160: pressure supply unit
1170: load cell
1180: second guide member
1190: pressure relief section
1200: pressure information acquisition unit
1300: pressure adjustment unit
1400: temperature adjustment unit
1500: control unit
1600, 2600: chamber section

## Claims

1. A secondary battery manufacturing apparatus comprising:
at least one pressing unit that applies pressure on a plurality of battery cells in a state where the plurality of battery cells are built in,
wherein the pressing unit comprises a plurality of pressing blocks located respectively at the outermost side of the plurality of battery cells and between the plurality of battery cells, and a pressure supply section that applies pressure to the plurality of pressing blocks,
wherein the pressing block includes a pressing plate and a pressure sensor unit located on one surface of the pressing plate, and
wherein the pressure sensor unit corresponds to the body surface of the battery cell.

2. The secondary battery manufacturing apparatus according to claim 1, wherein:
the pressing block further comprises a protective pad unit attached to a surface of the pressing plate that faces the body surface of the battery cell.

3. The secondary battery manufacturing apparatus according to claim 1,
further comprising a pair of side surface plates located respectively on the outermost side of the plurality of battery cells,
wherein the plurality of pressing blocks are located between the pair of side surface plates.

4. The secondary battery manufacturing apparatus according to claim 3,
further comprising a first guide member that connects the pair of side surface plates to each other at an upper part and a lower part of the plurality of pressing blocks.

5. The secondary battery manufacturing apparatus according to claim 1, wherein:
the pressure supply section comprises a pressure supply plate and at least two pressure supply units located on one surface of the pressure supply plate, and
the pressure supply plate faces a pressing block located at the outermost side among the plurality of pressing blocks.

6. The secondary battery manufacturing apparatus according to claim 5, wherein:
in the pressure supply section, the pressure supply unit comprises at least one selected from a servo motor, a pneumatic cylinder, and a hydraulic press.

7. The secondary battery manufacturing apparatus according to claim 5, wherein:
the at least two pressure supply units comprise a first pressure supply unit and a second pressure supply unit, and
on one surface of the pressure supply plate, the first pressure supply unit and the second pressure supply unit are arranged to be spaced apart from each other in the vertical direction.

8. The secondary battery manufacturing apparatus according to claim 5, wherein:
the at least two pressure supply units comprises a pair of first pressure supply units and a pair of second pressure supply units,
the pair of first pressure supply units are arranged to be spaced apart from each other at the upper part of one surface of the pressure supply plate, and
the pair of second pressure supply units are arranged to be spaced apart from each other at the lower part of one surface of the pressure supply plate.

9. The secondary battery manufacturing apparatus according to claim 5, wherein:
the pressure supply section further comprises a load cell connected to a pressing block located at the outermost side among the plurality of pressing blocks, and
the other surface of the pressure supply plate is connected to the load cell to apply pressure to the plurality of pressing blocks.

10. The secondary battery manufacturing apparatus according to claim 9,
further comprising a second guide member that connects the pressure supply plate and the plurality of pressing blocks to each other at an upper part and a lower part of the load cell.

11. The secondary battery manufacturing apparatus according to claim 1, wherein:
further comprising at least one pair of pressure relief sections located between a pair of pressing blocks adjacent to each other among the plurality of pressing blocks,
wherein the at least one pair of pressure relief sections are located at an upper part and a lower part of the pair of pressing blocks, respectively.

12. The secondary battery manufacturing apparatus according to claim 11, wherein:
the at least one pair of pressure relief sections comprise a pair of first pressure relief sections and a pair of second pressure relief sections,
the pair of first pressure relief sections are located adjacent to one side surface of the pair of pressing blocks, and
the pair of second pressure relief sections are located adjacent to the other side surface of the pair of pressing blocks.

13. The secondary battery manufacturing apparatus according to claim 11, wherein:
the pressure relief section comprises a rotating roll and a rotating shaft passing through the center of the rotating roll, and
the rolling surface of the rotating roll rotates along the space between the pair of pressing blocks.

14. The secondary battery manufacturing apparatus according to claim 12, wherein:
a cross section of the rotating roll cut based on the pressing direction of the pressing block has an oval shape.

15. The secondary battery manufacturing apparatus according to claim 1, wherein:
the apparatus comprises,
a chamber section in which the at least one pressing unit is arranged to be spaced apart from each other, and
a temperature adjustment unit that adjusts the temperature inside the chamber section.

16. The secondary battery manufacturing apparatus according to claim 15, wherein:
in the chamber section, the at least one pressing unit is arranged such that the pressing direction and the gravity direction of the pressing unit are perpendicular to each other.

17. The secondary battery manufacturing apparatus according to claim 15, wherein:
in the chamber section, the at least one pressing unit is arranged such that the pressing direction and the gravity direction of the pressing unit are equal to each other.

18. The secondary battery manufacturing apparatus according to claim 1,
further comprising a pressure information acquisition unit that acquires pressure information measured from the pressure sensor unit, and a pressure adjustment unit that adjusts pressure applied to the battery cell based on the pressure information acquired from the pressure information acquisition unit.

19. The secondary battery manufacturing apparatus according to claim 1, wherein:
the pressure sensor unit acquires pressure information on the entire body surface of the battery cell.

20. The secondary battery manufacturing apparatus according to claim 19, wherein:
the pressure sensor unit measures the surface pressure of the battery cell in a grid form.
